# EUROPÄISCHE PATENTANMELDUNG

(11) **EP 4 354 791 A1**
(43) Veröffentlichungstag der Anmeldung: **17.04.2024**
(21) Anmeldenummer: 22201544.8
(22) Anmeldetag: 14.10.2022
(51) Int. Cl.: H04L 9/08, H04L 9/12

(54) **ATTESTIERUNG DER SYNCHRONISATION EINES KRYPTOGRAPHISCHEN SCHLÜSSELS**

(71) Anmelder: Siemens Aktiengesellschaft, 80333 München (DE)
(72) Erfinder: Falk, Rainer, 85586 Poing (DE)
(74) Vertreter: Siemens Patent Attorneys

(57) **Zusammenfassung**

Die Erfindung betrifft eine Schlüsselsynchronisationsattestierung (13) zum Attestieren eines kryptographischen Schlüssels, wobei der kryptographische Schlüssel auf einer ersten Einheit (1) vorliegt, aufweisend:
- Eine Synchronisationsinformation, aufweisend eine Information bezüglich einer Synchronisierbarkeit (21) des kryptographischen Schlüssels für eine zweite Einheit (2), und
- eine Referenz auf den kryptographischen Schlüssel.

Außerdem betrifft die Erfindung ein verwendendes Anwendungsprogramm (11), eine erstellende Geräteeinheit und eine zugehörige erste Einheit (1), insbesondere ein Gerät (1) sowie ein zugehöriges Verfahren zum Erstellen einer Schlüsselsynchronisationsattestierung (13) zum Attestieren eines kryptographischen Schlüssels.

## Beschreibung

### HINTERGRUND DER ERFINDUNG

### Gebiet der Erfindung

Die vorliegende Erfindung betrifft eine Schlüsselsynchronisationsattestierung zum Attestieren eines kryptographischen Schlüssels. Die Erfindung betrifft außerdem ein verwendendes Anwendungsprogramm, eine erstellende Geräteeinheit und eine zugehörige erste Einheit, insbesondere ein Gerät, sowie ein zugehöriges Verfahren zum Erstellen einer Schlüsselsynchronisationsattestierung.

### Beschreibung des Stands der Technik

Das Betriebssystem Android unterstützt eine Schlüsselattestierung, auch als Key Attestation bezeichenbar. Sie bestätigt die Art der Schlüsselspeicherung eines von einer App verwendeten kryptographischen Schlüssels gegenüber einem Kommunikationspartner. Dadurch kann die App gegenüber dem Kommunikationspartner nachweisen, wie gut geschützt ein von der App verwendeter kryptographischer Schlüssel auf dem Mobilgerät gespeichert ist. Eine Speicherung ist insbesondere in Software, in einem Trusted Execution Environment oder in einem Hardware Secure Element möglich. Eine App kann diese Information über einen von ihr verwendeten kryptographischen Schlüssel auch selbst von dem Gerät, auf welchem die App läuft, abfragen und abhängig davon ihr App-Ausführungslogik anpassen.

Im Rahmen der Android Key Attestation gibt der Parameter "SecurityLevel" die Stärke der Schlüsselspeicherung an (Software, TrustedEnvironment, StrongBox). Daneben können weitere Schlüsseleigenschaften bestätigt werden, insbesondere ob der Schlüssel für alle oder nur für einzelne Apps nutzbar ist und/oder in welchem Gerätezustand der Schlüssel nutzbar ist, insbesondere nur dann, wenn das Gerät, auf welchem die App läuft, entsperrt ist.

Manche Schlüssel liegen nur auf einem einzelnen Gerät vor. Es ist jedoch auch bekannt, dass Schlüssel eines Nutzers zwischen unterschiedlichen Geräten des Nutzers synchronisiert werden. Dies hat den Vorteil, dass Schlüssel und Passwörter eines Nutzers auf allen seinen Geräten nutzbar sind (z.B. für WLAN-Zugang, für Webseiten-Authentisierung). Dies ist zwar heute bei dem Android Keystore nicht vorgesehen, es gibt eine solche Funktionalität aber z.B. bei Web-Browsern (z.B. Microsoft Edge) und ist für FIDO- (Fast IDentity Online) Authentisierungstoken beschrieben.

Außerdem sind Multi-device FIDO Credentials bekannt. Die Idee von Multi-Device FIDO Credentials ist, dass ein Anwender die von ihm genutzten FIDO-Credentials von einem Gerät auf ein neues Gerät übernehmen kann. Wenn ein FIDO-Authenticator durch ein Betriebssystem realisiert ist, kann das Betriebssystem die FIDO-Credentials zwischen den unterschiedlichen Geräten eines Nutzers synchronisieren. Es ist auch beschrieben, dass es neben den Multi-Device Credentials (Schlüssel) auch gerätegebundene Schlüssel geben kann, die nicht mit anderen Geräten synchronisierbar sind.

Die Aufgabe der Erfindung besteht darin, eine Lösung für eine verbesserte Schlüsselattestierung bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen. Die Erfindung betrifft eine Schlüsselsynchronisationsattestierung zum Attestieren eines kryptographischen Schlüssels, wobei der kryptographische Schlüssel auf einer ersten Einheit vorliegt,
aufweisend:
- Eine Synchronisationsinformation, aufweisend eine Information bezüglich einer Synchronisierbarkeit des kryptographischen Schlüssels für eine zweite Einheit, und
- eine Referenz auf den kryptographischen Schlüssel.

Die erste Einheit ist insbesondere als ein erstes Gerät ausgebildet. Die zweite Einheit ist insbesondere als ein zweites Gerät oder ein Schlüsselsynchronisationsdienst ausgebildet.

Die Synchronisationsinformation gibt an, ob der kryptographische Schlüssel mit einer anderen Einheit, insbesondere Gerät, synchronisierbar ist. Unter "mit einer anderen Einheit synchronisierbar" wird verstanden, dass der gleiche kryptographische Schlüssel gleichzeitig auf der ersten Einheit und auf zumindest einer weiteren zweiten Einheit vorliegen kann.

Bei der Synchronisationsinformation handelt es sich insbesondere um eine Bestätigungsinformation der Synchronisierbarkeit eines von einer App verwendeten kryptographischen Schlüssels gegenüber einem Kommunikationspartner.

Synchronisierbarkeit bedeutet, dass der kryptographische Schlüssel synchronisierbar ist, d.h. dass eine Synchronisation des kryptographischen Schlüssels und Nutzung auf der anderen zweiten Einheit möglich ist.

Der kryptographische Schlüssel ist insbesondere auf der ersten Einheit vorliegend, insbesondere in einem Schlüsselspeicher der ersten Einheit abgespeichert.

In einer weiteren Ausführungsform ist die erste Einheit ausgebildet, auf den kryptographischen Schlüssel zuzugreifen und/oder zu verwenden, wobei der kryptographischen Schlüssel insbesondere in einer Cloud-Umgebung abrufbar vorliegt. Vorliegen umfasst auch, dass der Schlüssel in einem nichtflüchtigen Speicher oder in einem Sicherheitselement der ersten Einheit abgelegt ist. Vorliegen kann ebenso bedeuten, dass der Schlüssel in einem mit der ersten Einheit lösbar verbundenem nichtflüchtigen Speicher oder in einem mit der ersten Einheit lösbar verbundenem Sicherheitselement oder Sicherheitstoken gespeichert ist. Vorliegen kann weiterhin bedeuten, dass der Schlüssel in einem mit der ersten Einheit kommunikativ verbundenem nichtflüchtigen Speicher oder in einem mit der ersten Einheit kommunikativ verbundenem Sicherheitselement oder Sicherheitstoken gespeichert ist. Die Kommunikation kann dabei beispielsweise mittel Kurzstreckenfunk, z.B. RFID, NFC, Bluetooth, ZigBee, IEEE 802.15.4 erfolgen, über optische Kommunikation, z.B. IrDA Infrarot, über eine akustische Kommunikation, oder über eine Datenübertragungsstrecke, z.B. bei Speicherung des Schlüssels in einem Netzwerk-basierten Hardware Secure Element. Der kryptographische Schlüssel kann dabei dauerhaft, d.h. nichtflüchtig, auf dem ersten Gerät vorliegen. Es ist auch möglich, dass der kryptographische Schlüssel temporär, d.h. flüchtig, auf dem ersten Gerät vorliegt, beispielsweise wenn er bei Bedarf oder jeweils beim Gerätehochlauf (Booten) von einem Cloud-Service in einen flüchtigen Speicher des ersten Geräts geladen wird, d.h. dass er wiederholt mit dem ersten Gerät synchronisiert wird.

Die Information bezüglich der Synchronisierbarkeit des kryptographischen Schlüssels für die zweite Einheit gibt an, ob der kryptographischen Schlüssel synchronisiert werden kann. Wo die Synchronisation stattfindet, ist variabel, sie findet aber für die zweite Einheit statt, d.h. die synchronisierte Version des kryptographischen Schlüssels ist für die zweite Einheit vorgesehen.

Die Referenz auf den kryptographischen Schlüssel ist als eine eindeutige Benennung des Schlüssels, eine Angabe des Schlüssels, ein Schlüsselbezeichner, ein key identifier und/oder eine ID auf den kryptographischen Schlüssel, auf den sie sich bezieht, ausgebildet. Dabei handelt es sich insbesondere um einen kryptographischen Hash-Wert des Schlüssels oder um einen Index-Wert eines Schlüsselspeichereintrags, in dem der Schlüssel im Keystore/Schlüsselspeicher abgelegt ist.

Die Synchronisationsinformation umfasst vorzugsweise weiterhin einen Geräteidentifier (fester oder pseudonymer oder wechselnder Geräteidentifier) der ersten Einheit.

Dadurch kann ein Empfänger der Schlüsselsynchronisationsattestierung überprüfen, ob der verwendete Schlüssel nur auf der aktuell verwendeten ersten Einheit vorliegt oder möglicherweise auch auf anderen zweiten Einheiten.

Ein Aspekt der Erfindung besteht darin, eine Information bereitzustellen, ob ein Schlüssel auch auf anderen Geräten vorliegen kann. Dies ist neben der Art der Schlüsselspeicherung relevant, um zu bewerten, ob ein Schlüssel hinreichend vertrauenswürdig ist.

Die Erfindung hat den Vorteil, dass ein Kommunikationspartner verlässlich ermitteln kann, ob ein von einem Gerät bzw. einer darauf ausgeführten App verwendeter Authentisierungsschlüssel auch auf anderen Geräten vorliegt oder zumindest vorliegen könnte. Kritische Aktionen können gesperrt werden, wenn der verwendete Schlüssel nicht die erwarteten Anforderungen erfüllt.

Die Erfindung bietet den weiteren Vorteil, dass ein Kommunikationspartner, insbesondere Banking-App, Gebäudezugang oder Mietfahrzeugzugang, üblicherweise eine Web-Applikation oder ein Web-Service, überprüfen kann, ob ein von einer App der ersten Einheit, insbesondere ein erstes Gerät, verwendeter kryptographischer Schlüssel mit anderen zweiten Einheiten, insbesondere zweiten Geräten, geteilt wird. Weiterhin kann der Kommunikationspartner ggf. überprüfen, wie gut dieser Schlüssel auf den anderen Geräten geschützt ist. Davon abhängig kann der Kommunikationspartner das erste Gerät oder einen Zugriff durch das erste Gerät akzeptieren.

Die App der ersten Einheit kann den Schlüssel insbesondere verwenden, um sich gegenüber dem Kommunikationspartner zu authentisieren, z.B. bei Nutzung eines authentisierten Kommunikationsprotokolls (z.B. OPC UA, TLS, DTLS, IPsec/IKEv2, ssh, EAP-TLS, EAP-TTLS, MACsec IEEE 802.1ae/af). Weiterhin kann die App der ersten Einheit den Schlüssel verwenden, um eine an den Kommunikationspartner zu übermittelnde Datenstruktur, z.B. eine Transaktion, digital zu signieren oder um eine kryptographische Prüfsumme der Datenstruktur zu bilden. Weiterhin kann die App der ersten Einheit den Schlüssel auch verwenden, um eine digitale Signatur oder kryptographische Prüfsumme einer von dem Kommunikationspartner empfangenen, durch eine digitale Signatur beziehungsweise eine kryptographische Prüfsumme geschützte Datenstruktur, zu überprüfen.

Die App der ersten Einheit kann den Schlüssel ebenso verwenden, um eine authentisierte und verschlüsselte Kommunikationsverbindung zu einem Kommunikationspartner aufzubauen. Die App der ersten Einheit kann den Schlüssel auch verwenden, um eine an den Kommunikationspartner zu übermittelnde Datenstruktur zu verschlüsseln oder um eine von dem Kommunikationspartner empfangene verschlüsselte Datenstruktur zu entschlüsseln.

Weiterhin kann eine App der ersten Einheit vorzugsweise diese Information ebenfalls über einen Aufruf an ein Betriebssystem oder an eine App-Ausführungsumgebung abfragen, sodass die App ihre Ausführungslogik davon abhängig anpassen kann.

In einer Weiterbildung der Erfindung weist die Synchronisationsinformation außerdem eine Information bezüglich einer stattgefundenen Synchronisation bezüglich des kryptographischen Schlüssels für die zweite Einheit auf.

Die Synchronisationsinformation gibt somit an, ob der kryptographischen Schlüssel mit einer anderen Einheit synchronisiert wurde. Unter "mit einer anderen Einheit synchronisiert" wird verstanden, dass der gleiche kryptographische Schlüssel gleichzeitig auf der ersten und auf zumindest einer zweiten Einheit vorliegt. Ein mit einer zweiten Einheit bzw. einem zweiten Gerät synchroniserter Schlüssel liegt somit auf diesem vor und kann auf diesem verwendet werden, auch wenn keine kommunikative Verbindung zwischen erster Einheit / erstem Gerät und zweiter Einheit / zweitem Gerät besteht. Ein nicht synchronisierbarer Schlüssel des ersten Geräts liegt dagegen nur auf der ersten Einheit beziehungsweise nur auf dem ersten Gerät vor.

Die Synchronisationsinformation gibt somit zusätzlich an, ob der kryptographische Schlüssel auf der zweiten Einheit synchronisiert ist.

Die Information bezüglich der stattgefundenen Synchronisation ist unabhängig davon, ob Ergebnisse der stattgefundenen Synchronisation aktuell noch existieren oder bereits gelöscht oder überschrieben wurden. Die Information bezüglich einer stattgefundenen Synchronisation ist somit unabhängig davon, ob der kryptographische Schlüssel auf anderen zweiten Einheiten aktuell vorliegt oder zurückliegend vorlag.

Die Information bezüglich der stattgefundenen Synchronisation kann in einer Ausführungsform um eine aktuelle Existenz der Ergebnisse der stattgefundenen Synchronisation erweitert werden. Ergebnisse der Synchronisation sind insbesondere die synchronisierte Version des kryptographischen Schlüssels.

Dadurch kann ein Empfänger der Schlüsselsynchronisationsattestierung überprüfen, ob der verwendete Schlüssel nur auf der aktuell verwendeten ersten Einheit vorliegt oder auch auf anderen zweiten Einheiten.

"Für die zweite Einheit" bedeutet, dass die synchronisierte Version des kryptographischen Schlüssels für die zweite Einheit vorgesehen ist.

In einer weiteren Weiterbildung der Erfindung ist die stattgefundene Synchronisation ausgebildet als:
- eine vorrangegangene Synchronisation und/oder
- eine nachgefolgte Synchronisation.

Die vorrangegangene Synchronisation hat stattgefunden, bevor der kryptographische Schlüssel auf der ersten Einheit vorlag. Das erste Gerät hat den kryptographischen Schlüssel insbesondere über eine Schlüsselsynchronisation erhalten.

Die nachgefolgte Synchronisation hat stattgefunden, nachdem der kryptographische Schlüssel auf der ersten Einheit vorlag. Die erste Einheit hat den kryptographischen Schlüssel insbesondere mit der zweiten Einheit oder einem Cloud-basiertem Schlüsselsynchronisationsdienst synchronisiert, d.h. an dieses/diesen übermittelt. Der Cloud-basiertem Schlüsselsynchronisationsdienst kann als zentraler Dienst auf einer Backend-Cloud-Plattform realisiert sein, z.B. bei einem Internet-Cloud-Service, oder auf einer Edge-Cloud-Plattform.

In einer weiteren Weiterbildung der Erfindung weist die Schlüsselsynchronisationsattestierung außerdem auf:
- Einen kryptographischen Schutz, wobei der kryptographische Schutz die Schlüsselsynchronisationsattestierung zumindest teilweise vor einer Modifikation schützt.

In einer weiteren Weiterbildung der Erfindung weist die Schlüsselsynchronisationsattestierung außerdem auf:
Eine erste Schlüsselspeicherinformation, wobei die erste Schlüsselspeicherinformation eine Art der Speicherung des kryptographischen Schlüssels auf der ersten Einheit angibt und/oder
- Eine erste Schlüsselnutzbarkeitsinformation, wobei die erste Schlüsselnutzbarkeitsinformation mindestens eine Bedingung für ein Nutzen des kryptographischen Schlüssels auf der ersten Einheit angibt und/oder
- Eine erste Integritätsstatusinformation, wobei die erste Integritätsstatusinformation einen Integritätsstatus der ersten Einheit angibt.

Die Art der Speicherung des kryptographischen Schlüssels umfasst insbesondere eine Speicherung durch in Software, in einer Trusted Execution Environment, in einer Management Engine, in einem Firmware SecureElement, in einem integrated Hardware Secure Element und/oder in einem Dedicated Hardware Security Element der ersten Einheit.

Die Art der Speicherung des kryptographischen Schlüssels umfasst außerdem insbesondere, ob eine Speicherung des kryptographischen Schlüssels, insbesondere Schlüsselspeicher-Implementierung oder Key Store, fest in die erste Einheit integriert ist, oder ob es ein wechselbarer Schlüsselspeicher ist, insbesondere ein im Formfaktor einer SD-Card oder einer SIM-Karte/UICC realisierter Schlüsselspeicher, oder ein über USB oder Bluetooth mit der ersten Einheit verbundener externer Schlüsselspeicher.

Die erste Schlüsselnutzbarkeitsinformation gibt an, unter welchen Bedingungen der kryptographische Schlüssel auf der ersten Einheit, insbesondere dem ersten Gerät, nutzbar ist, insbesondere nur in einem entsperrten Zustand der ersten Einheit.

Die erste Integritätsstatusinformation gibt einen Integritätsstatus, auch als Vertrauensstaus oder Gerätevertrauensstatus bezeichenbar, der ersten Einheit an. Bei dieser Information kann es sich um den tatsächlichen Gerätevertrauensstatus der zweiten Einheit handeln, der bei einer gegebenenfalls erfolgten Synchronisation vorlag. Es kann sich dabei auch um einen Mindestgerätevertrauensstatus handeln, den die zweite Einheit erfüllen muss, damit eine Synchronisation des kryptographischen Schlüssels möglich ist. Dadurch liegt eine Information vor, dass die zweite Einheit, mit der der kryptographische Schlüssel synchronisiert werden kann, eine gewisse Voraussetzung an deren Gerätevertrauensstatus erfüllen muss.

In einer weiteren Weiterbildung der Erfindung weist die Schlüsselsynchronisationsattestierung außerdem auf:
- eine Referenz zu der zweiten Einheit.

Weiterhin kann die erste Einheit eine Referenz zu der zweiten Einheit, insbesondere eine Information zu den Device-Identifiern der zweiten Einheiten, mit denen der Schlüssel synchronisiert ist, erfassen, d.h. auf denen er aktuell vorliegt, oder zu den zweiten Einheiten, mit denen der Schlüssel synchronisierbar ist. Diese Information kann insbesondere von einem Cloud-basierten Service abgefragt werden, der die einem authentisierten Nutzer zugeordneten Geräte verwaltet.

In einer weiteren Weiterbildung der Erfindung weist die Schlüsselsynchronisationsattestierung außerdem auf:
- Eine zweite Schlüsselspeicherinformation, wobei die zweite Schlüsselspeicherinformation eine Art der Speicherung des kryptographischen Schlüssels auf der zweiten Einheit angibt und/oder
- Eine zweite Schlüsselnutzbarkeitsinformation, wobei die zweite Schlüsselnutzbarkeitsinformation mindestens eine Bedingung für ein Nutzen des kryptographischen Schlüssels auf der zweiten Einheit angibt und/oder
- Eine zweite Integritätsstatusinformation, wobei die zweite Integritätsstatusinformation einen Integritätsstatus der zweiten Einheit angibt.

Vorzugsweise erfasst oder verwaltet die erste Einheit weitere Information zu der zweiten Einheit.

Bezüglich der zweiten Schlüsselspeicherinformation, der zweiten Schlüsselnutzbarkeitsinformation und der zweiten Integritätsstatusinformation gelten die zu der ersten Schlüsselspeicherinformation, ersten Schlüsselnutzbarkeitsinformation und ersten Integritätsstatusinformation angebenden Beschreibungsteile jeweils entsprechend.

Die Erfindung umfasst außerdem ein Anwendungsprogramm, ausgebildet eine erfindungsgemäße Schlüsselsynchronisationsattestierung für eine Attestierung eines von dem Anwendungsprogramm verwendeten Schlüssel zu verwenden.

Das Anwendungsprogramm ist außerdem ausgebildet, die Schlüsselsynchronisationsattestierung abzurufen/abzufragen, insbesondere von einer Geräteeinheit, welche die Schlüsselsynchronisationsattestierung bereitstellt.

Das Anwendungsprogramm ist außerdem ausgebildet, die Schlüsselsynchronisationsattestierung an ein weiteres Anwendungsprogramm weiterzuleiten. Das hat für das weitere Anwendungsprogramm den Vorteil, abhängig von der Schlüsselsynchronisationsattestierung ihre App-Ausführungslogik anpassen zu können.

Die Synchronisationsinformation umfasst vorzugsweise weiterhin einen Anwendungsprogramm-Identifier (insbesondere Hash-Wert des Anwendungsprogramms, ein Schlüssel oder digitales Zertifikat eines Anwendungsprogrammherausgebers / Anwendungsprogramm-Signierers oder ein Anwendungsprogrammname) desjenigen Anwendungsprogramms, der diese Schlüsselsynchronisationsattestierung bereitgestellt wird.

Die Erfindung umfasst außerdem eine Geräteeinheit, insbesondere ausgebildet als Betriebssystem oder App-Ausführungsumgebung, ausgebildet eine erfindungsgemäße Schlüsselsynchronisationsattestierung bereitzustellen.

Die Erfindung umfasst außerdem eine erste Einheit, insbesondere ein Gerät, aufweisend eine erfindungsgemäße Geräteeinheit.

Das Gerät ist insbesondere als ein IoT-Gerät ausgebildet.

Die Erfindung umfasst außerdem ein Verfahren zum Erstellen einer Schlüsselsynchronisationsattestierung zum Attestieren eines kryptographischen Schlüssels, wobei der kryptographische Schlüssel auf einer ersten Einheit vorliegt,
mit den Schritten:
- Ein Erzeugen einer Synchronisationsinformation, aufweisend eine Information bezüglich einer Synchronisierbarkeit des kryptographischen Schlüssels für eine zweite Einheit,
- Ein Erzeugen einer Referenz auf den kryptographischen Schlüssel und
- Ein Zuordnen der Synchronisationsinformation und der Referenz zu der Schlüsselsynchronisationsattestierung.

In einer Weiterbildung der Erfindung ein erfindungsgemäßes Verfahren zum Erstellen einer erfindungsgemäße Schlüsselsynchronisationsattestierung.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung eines erfindungsgemäßen Geräts und
- Fig. 2: ein Ablaufdiagramm des erfindungsgemäßen Verfahrens.

### DETAILLIERTE BESCHREIBUNG DER ERFINDUNG

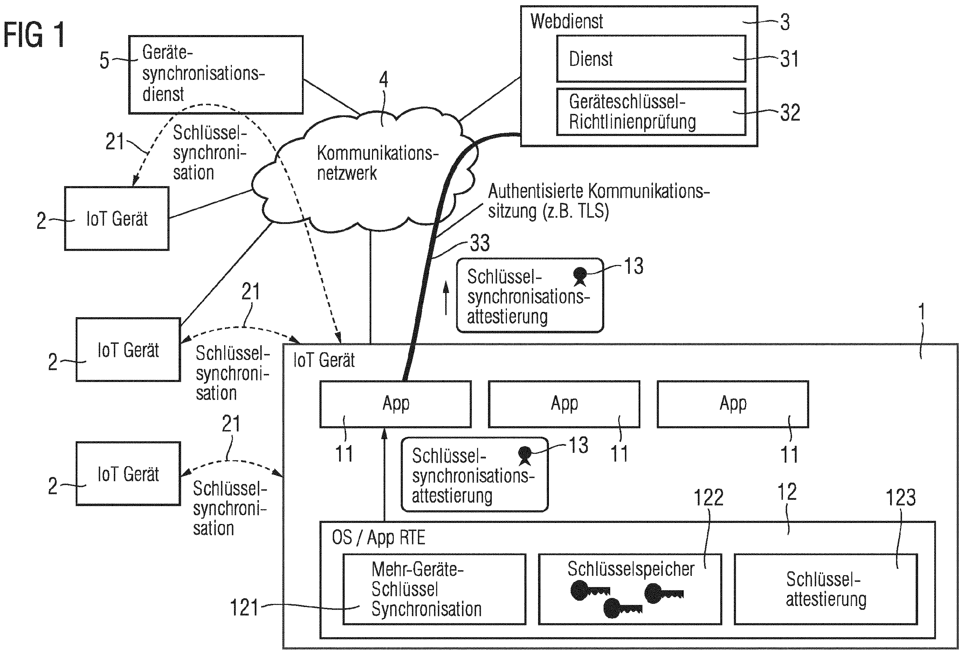

Fig. 1 zeigt eine schematische Darstellung eines erfindungsgemäßen Geräts 1, d.h. der ersten Einheit oder des ersten Geräts. Das Gerät 1 weist eine erfindungsgemäße Geräteeinheit 12 auf. Die Geräteeinheit 12, insbesondere ausgebildet als Betriebssystem 12 oder App-Ausführungsumgebung 12, ist ausgebildet eine Schlüsselsynchronisationsattestierung 13 zum Attestieren eines kryptographischen Schlüssels bereitzustellen.

Die Schlüsselsynchronisationsattestierung 13 zum Attestieren eines kryptographischen Schlüssels, wobei der kryptographische Schlüssel auf einer ersten Einheit 1, das Gerät 1, vorliegt, weist auf:
- Eine Synchronisationsinformation, aufweisend eine Information bezüglich einer Synchronisierbarkeit 21 des kryptographischen Schlüssels für eine zweite Einheit 2, ein zweites Gerät 2, und
- eine Referenz auf den kryptographischen Schlüssel.

Die Erfindung umfasst außerdem ein Anwendungsprogramm 11, eine App 11, ausgebildet eine Schlüsselsynchronisationsattestierung 13 für eine Attestierung eines von dem Anwendungsprogramm 11 verwendeten Schlüssel zu verwenden.

Das Gerät 1 ist in Fig. 1 als ein IoT-Gerät 1 mit einem Betriebssystem 12 (operating system 12) und/oder einer App-Ausführungsumgebung 12 (App Runtime Environment 12) zur Ausführung von Apps 11 ausgebildet. Die App-Ausführungsumgebung 12 (App RTE, App Runtime Environment) stellt Apps 11 einen Schlüsselspeicher 122 (Key Store 122) bereit sowie die Möglichkeit, eine vom Betriebssystem 12 bzw. der App-Ausführungsumgebung 12 digital signierte Attestierung 13 bereitzustellen. Eine App 11 kann sich dadurch gegenüber einem Web-Service 3 authentisieren und durch die Attestierung 13 Zusatzinformation zu dem dabei verwendeten Schlüssel gegenüber dem Web-Service 13 bestätigen. Die Attestierung 13 kann statt durch eine digitale Signatur auch durch eine kryptographische Prüfsumme, insbesondere einen Message Authentication Code, geschützt sein, oder die Attestierung 13 kann als Verifiable Credential oder als Verifiable Presentation ausgestaltet sein.

Der Web-Service 13 kann durch einen Device Key Policy Check 32 prüfen, ob diese Zusatzinformation zur Art, wie der Schlüssel auf dem Gerät 1 gehandhabt wird, prüfen und davon abhängig die Nutzung eines bereitgestellten Dientes 31 (Service 31) über die authentisierten Kommunikationsverbindung 33 durch das IoT-Gerät 1 freigeben, einschränken oder sperren.

Es ist vorgesehen, dass zumindest einzelne der auf dem Gerät 1 vorliegenden Schlüssel mit anderen Geräten synchronisiert werden können bzw. synchronisiert sind (Multi-Device Key Synchronization 121). Dies kann über ein Kommunikationsnetzwerk 4, über eine direkte Gerät-zu-Gerät-Verbindung (z.B. Bluetooth, IrDA) erfolgen, oder über einen Cloud-basierten Dienst 5 zur geräteübergreifenden Schlüsselsynchronisation 21. Der Cloud-basierten Dienst 5 ist auch als Device Sync Service 5 bezeichenbar.

Die Multi-Device Key Synchronisations-Einheit 121 verwaltet Information zur Schlüsselsynchronisation 21, d.h. ob für einen bestimmten Schlüssel eine geräteübergreifende Schlüsselsynchronisation 21 zulässig ist. Weiterhin kann sie eine Information verwalten, mit welchen anderen Geräten 2 eine Schlüsselsynchronisation 21 eines bestimmten Schlüssels bereits erfolgt ist, und optional eine Geräteintegritätsinformation und/oder Schlüsselspeicherartinformation der anderen Geräte 2.

Die Key-Sync-Attestation 13 umfasst einen Schlüsselbezeichner (key identifier) desjenigen Schlüssels, auf den sie sich bezieht. Dabei kann es sich z.B. um einen kryptographischen Hash-Wert des Schlüssels handeln oder um einen Index-Wert eines Schlüsselspeichereintrags, in dem der Schlüssel im Keystore abgelegt ist. Die Key-Sync-Attestation 13 umfasst vorzugsweise weiterhin einen Geräteidentifier (fester oder pseudonymer oder wechselnder Geräteidentifier) des ausstellenden IoT-Geräts 1 und einen App-Identifier (z.B. Hash-Wert der App 11, ein Schlüssel oder digitales Zertifikat eines App-Herausgebers / App-Signierers oder ein App-Name) derjenigen App 11, der diese Key-Sync-Attestation 13 bereitgestellt wird.

Die Key Attestation Einheit 123 bildet eine Key-Sync-Attestation 13, die angibt, ob ein von einer App 11 zur Authentisierung oder Verschlüsselung verwendeter Schlüssel geräteübergreifend synchronisiert ist, beziehungsweise ob eine geräteübergreifende Synchronisierung dieses Schlüssels zulässig und damit grundsätzlich möglich ist. Weiterhin kann die von ihr gebildete Key-Sync-Attestation 13 eine Information angeben, ob eine Synchronisation mit anderen Geräten möglich ist und/oder mit welchen anderen Geräten 2 eine Synchronisation 21 dieses Schlüssels bereits erfolgt ist oder möglich ist, und welche Security-Eigenschaften (Device Integrity Status, Art der Schlüsselspeicherrealisierung) auf diesen Geräten 2 vorliegt, und/oder auf welche Art die Synchronisation 21 erfolgt oder geschützt ist (z.B. verwendete Protokolle, verwendete Key- Encapsulation-Verfahren). Die Key-Sync-Attestation 13 ist mit einem Geräteattestierungsschlüssel des IoT-Geräts 1 digital signiert. Sie wird einer auf dem IoT-Gerät 1 ausgeführten App 11 bereitgestellt, sodass die App 11 diese über einen authentisierten Kommunikationskanal 33 an einen Kommunikationspartner 3 (hier: Web-Service 3) übermitteln kann.

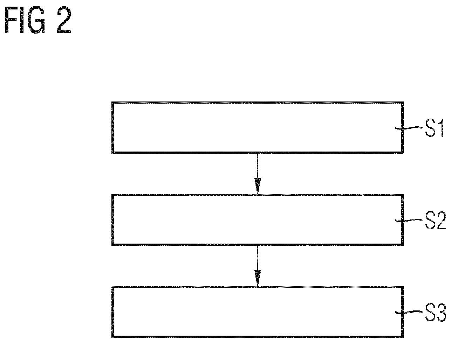

Fig. 2 zeigt ein Ablaufdiagramm des erfindungsgemäßen Verfahrens zum Erstellen einer Schlüsselsynchronisationsattestierung zum Attestieren eines kryptographischen Schlüssels, wobei der kryptographische Schlüssel auf einer ersten Einheit vorliegt,
mit den Schritten:
- Schritt S1: Ein Erzeugen einer Synchronisationsinformation, aufweisend eine Information bezüglich einer Synchronisierbarkeit des kryptographischen Schlüssels für eine zweite Einheit,
- Schritt S2: Ein Erzeugen einer Referenz auf den kryptographischen Schlüssel und
- Schritt S3: Ein Zuordnen der Synchronisationsinformation und der Referenz zu der Schlüsselsynchronisationsattestierung.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Schlüsselsynchronisationsattestierung (13) zum Attestieren eines kryptographischen Schlüssels, wobei der kryptographische Schlüssel auf einer ersten Einheit (1) vorliegt, aufweisend:
- Eine Synchronisationsinformation, aufweisend eine Information bezüglich einer Synchronisierbarkeit (21) des kryptographischen Schlüssels für eine zweite Einheit (2), und
- eine Referenz auf den kryptographischen Schlüssel.

2. Schlüsselsynchronisationsattestierung (13) nach Anspruch 1,
wobei die Synchronisationsinformation außerdem eine Information bezüglich einer stattgefundenen Synchronisation (21) bezüglich des kryptographischen Schlüssels für die zweite Einheit (2) aufweist.

3. Schlüsselsynchronisationsattestierung (13) nach Anspruch 2,
wobei die stattgefundene Synchronisation (21) ausgebildet ist als:
- eine vorrangegangene Synchronisation (21) und/oder
- eine nachgefolgte Synchronisation (21).

4. Schlüsselsynchronisationsattestierung (13) nach einem der vorhergehenden Ansprüche,
außerdem aufweisend:
- Einen kryptographischen Schutz, wobei der kryptographische Schutz die Schlüsselsynchronisationsattestierung (13) zumindest teilweise vor einer Modifikation schützt.

5. Schlüsselsynchronisationsattestierung (13) nach einem der vorhergehenden Ansprüche,
außerdem aufweisend:
- Eine erste Schlüsselspeicherinformation, wobei die erste Schlüsselspeicherinformation eine Art der Speicherung des kryptographischen Schlüssels auf der ersten Einheit (1) angibt und/oder
- Eine erste Schlüsselnutzbarkeitsinformation, wobei die erste Schlüsselnutzbarkeitsinformation mindestens eine Bedingung für ein Nutzen des kryptographischen Schlüssels auf der ersten Einheit (1) angibt und/oder
- Eine erste Integritätsstatusinformation, wobei die erste Integritätsstatusinformation einen Integritätsstatus der ersten Einheit (1) angibt.

6. Schlüsselsynchronisationsattestierung (13) nach einem der vorhergehenden Ansprüche,
außerdem aufweisend:
- eine Referenz zu der zweiten Einheit (2).

7. Schlüsselsynchronisationsattestierung (13) nach einem der vorhergehenden Ansprüche,
außerdem aufweisend:
- Eine zweite Schlüsselspeicherinformation, wobei die zweite Schlüsselspeicherinformation eine Art der Speicherung des kryptographischen Schlüssels auf der zweiten Einheit (2) angibt und/oder
- Eine zweite Schlüsselnutzbarkeitsinformation, wobei die zweite Schlüsselnutzbarkeitsinformation mindestens eine Bedingung für ein Nutzen des kryptographischen Schlüssels auf der zweiten Einheit (2) angibt und/oder
- Eine zweite Integritätsstatusinformation, wobei die zweite Integritätsstatusinformation einen Integritätsstatus der zweiten Einheit (2) angibt.

8. Anwendungsprogramm (11),
ausgebildet eine Schlüsselsynchronisationsattestierung (13) nach einem der vorhergehenden Ansprüche für eine Attestierung eines von dem Anwendungsprogramm (11) verwendeten Schlüssel zu verwenden.

9. Geräteeinheit (12), insbesondere ausgebildet als Betriebssystem (12) oder App-Ausführungsumgebung (12), ausgebildet eine Schlüsselsynchronisationsattestierung (13) nach einem der Ansprüche 1 bis 7 bereitzustellen.

10. Erste Einheit (1), insbesondere ein Gerät (1), aufweisend eine Geräteeinheit (12) nach Anspruch 9.

11. Verfahren zum Erstellen einer Schlüsselsynchronisationsattestierung (13) zum Attestieren eines kryptographischen Schlüssels, wobei der kryptographische Schlüssel auf einer ersten Einheit (1) vorliegt,
mit den Schritten:
- Ein Erzeugen (S1) einer Synchronisationsinformation, aufweisend eine Information bezüglich einer Synchronisierbarkeit (21) des kryptographischen Schlüssels für eine zweite Einheit (2),
- Ein Erzeugen (S2) einer Referenz auf den kryptographischen Schlüssel, und
- Ein Zuordnen (S3) der Synchronisationsinformation und der Referenz zu der Schlüsselsynchronisationsattestierung (13).

12. Verfahren nach Anspruch 11 zum Erstellen einer Schlüsselsynchronisationsattestierung (13) nach einem der Ansprüche 1 bis 7.
